# EUROPEAN PATENT APPLICATION

(11) **EP 1 586 906 A1**
(43) Date of publication of application: **19.10.2005**
(21) Application number: 04008710.8
(22) Date of filing: 13.04.2004
(51) Int. Cl.: G01P 15/135, G01P 15/08

(54) **Acceleration and displacement sensor**

(71) Applicant: Wang, Leao, Taiping City, Taichung Hsien, Taiwan 411 (TW)
(72) Inventor: Wang, Leao, Taiping City, Taichung Hsien, Taiwan 411 (TW)
(74) Representative: Reichel, Wolfgang

(57) **Abstract**

The invention relates to an acceleration and displacement sensor having a position signal generator (20), a signal-detecting and arithmetic unit (30), a power supply unit (40) and a rolling ball (50). The position signal generator (20) forms a closed space for defining the movement path of the rolling ball (50). The position signal generator (20) includes a plurality of sensing terminals (22) aligned to one another in axial direction. Each sensing terminal (22) represents a certain position signal value. The position signal value of the sensing terminal (22), where the rolling ball (50) is located, is continuously given to the signal-detecting and arithmetic unit (30). When the rolling ball (50) is forced to move in axial direction, the signal-detecting and arithmetic unit (30) calculates a displacement value and an acceleration value.

## Description

The present invention relates to an acceleration and displacement sensor.

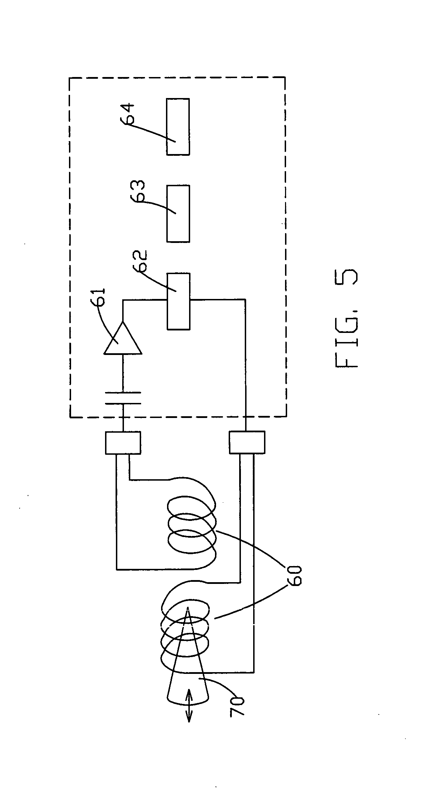

An acceleration and displacement sensor, as shown in FIG. 5 and know from the state of the art, includes a sensing coil 60 interacting with a cone 70. The cone 70 moves within the sensing coil 60 for producing the change of inductance frequency which can be converted to the displacement value in micron or even nanometer by means of a signal amplifier 61, a phase-shift circuit 62, a frequency deviation sensor 63 and a displacement calculator 64. The signal amplifier 61, the phase-shift circuit 62, the frequency deviation sensor 63 and the displacement calculator 64 are normally integrated in a microprocessor.

It is claimed that the sensing coil 60 can eliminate interference caused by the coil magnetic field through a certain arrangement. Theoretically to say, the interference is possibly overcome. However, many factors, like coil specification, material purity, current intensity, current stability, the preciseness of the coil arrangement, the connection of the apparatus, etc. can produce magnetic interference. Therefore, it is questionable whether such a displacement sensor enables high detection precision and stability.

The object of the present invention is to provide an improved acceleration and displacement sensor.

The object of the present invention is solved by an acceleration and displacement sensor according to claim 1.

The acceleration and displacement sensor uses a rolling ball interacting with sensing terminals for calculating an acceleration value and a displacement value.

Embodiments of the present invention will now be described, by the way of example only, with reference to the following drawings in which:
FIG. 1 is a schematic drawing of a first embodiment of the invention;
FIG. 2 is a schematic drawing of a second embodiment of the invention;
FIG. 3 is a schematic drawing of a third embodiment of the invention;
FIG. 4 is a cutaway view of FIG. 3; and
FIG. 5 is a schematic drawing of a conventional displacement sensor.

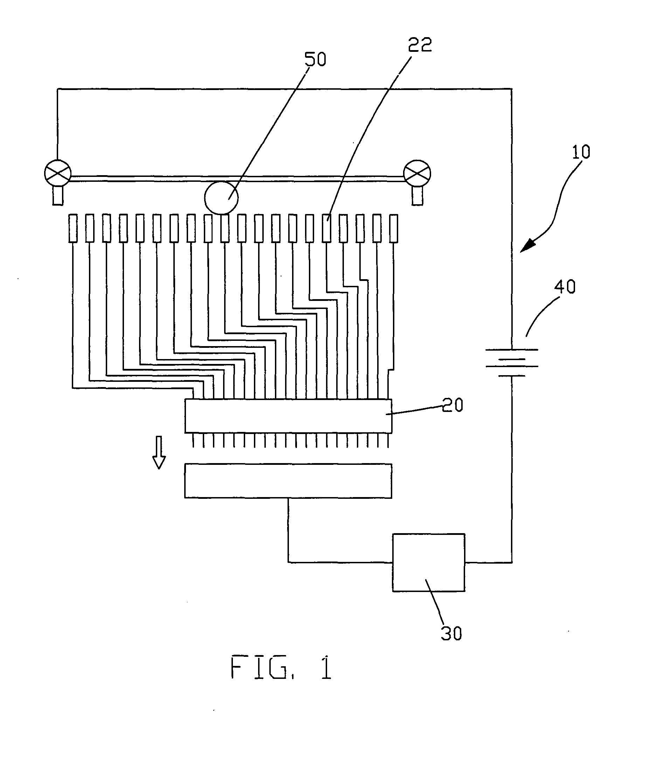

Referring to FIG. 1, the acceleration and displacement sensor in accordance with the invention includes a position signal generator 20, a signal-detecting and arithmetic unit 30, a power supply unit 40 and a rolling ball 50. The position signal generator 20 forms a closed space for defining the movement path of the rolling ball 50.

The position signal generator 20 includes a plurality of sensing terminals 22 aligned to one another in axial direction. Each sensing terminal 22 represents a certain position signal value. The position signal value of the sensing terminal 22, where the rolling ball 50 is located, is continuously given to the signal-detecting and arithmetic unit 30. When the rolling ball 50 is forced to move in axial direction, the signal-detecting and arithmetic unit 30 can receive different position signal values and obtain their change during a certain time period, thereby determining a displacement value and an acceleration value.

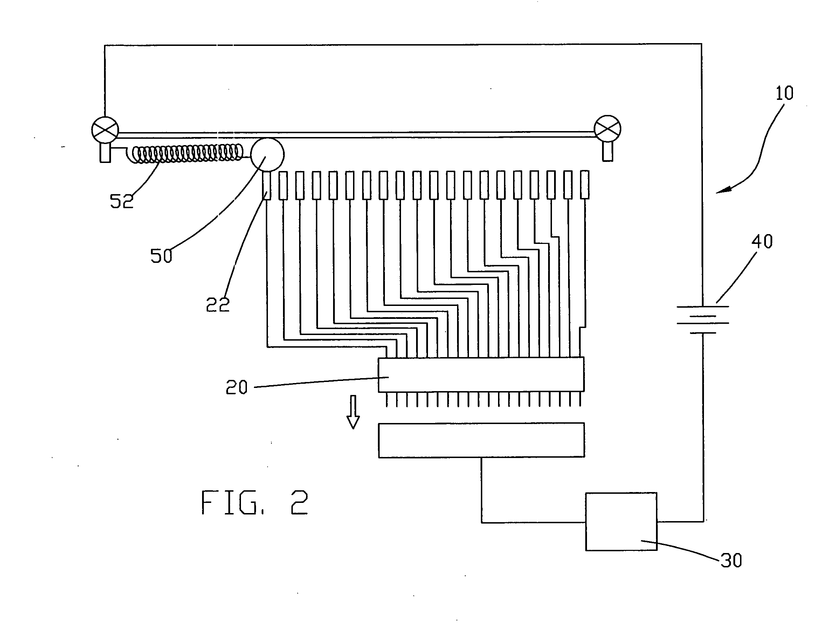

As shown in FIG. 2, an expansion spring 52 is attached to the rolling ball 50. The rolling ball 50 is movable by an external force while it, after being released, returns to its original position whose signal value is zero.

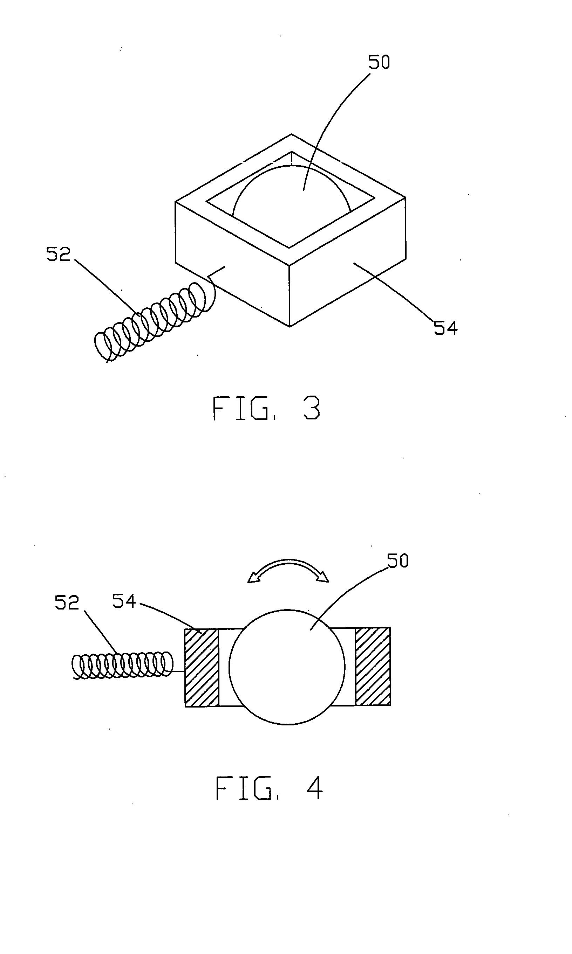

In order to reduce the frictional force between the rolling ball 50 and the sensing terminals 22 and to protect from deviation of the operational value caused by the frictional force, the rolling ball 50, as shown in FIGS. 3 and 4, can be movably received in a frame 54.

## Claims

1. Acceleration and displacement sensor comprising:
a.) a position signal generator (20) having a plurality of sensing terminals (22) aligned to one another in axial direction, each sensing terminal (22) representing a certain position signal value;
b.) a rolling ball (50) movable within a closed space de- finded by the position signal generator (20);
c.) a signal-detecting and arithmetic unit (30) for re- ceiving a position signal value of the sensing termi- nal (22) where the rolling ball (50) is located; and
d.) a power supply unit (40) connected to the signal- detecting and arithmetic unit (30);
the signal-detecting and arithmetic unit (30) receiving different position signal values and calculating their change during a certain time period, thereby determining a displacement value and an acceleration value when the rolling ball (50) is forced to move in axial direction.

2. The acceleration and displacement sensor of claim 1 further comprising an expansion spring (52) attached to the rolling ball (50) so that the rolling ball (50) is movable by an external force and returns to its original position whose signal value is zero when the external force is no longer present.

3. The acceleration and displacement sensor of claim 1 further comprising a frame (54) around the rolling ball (50) so that the rolling ball (50) is movably received within the frame (54).
